# EUROPÄISCHE PATENTSCHRIFT

(11) **EP 0 747 410 B1**
(45) Veröffentlichungstag und Bekanntmachung des Hinweises auf die Patenterteilung: **14.10.1998**
(21) Anmeldenummer: 96108405.0
(22) Anmeldetag: 28.05.1996
(51) Int. Cl.: C08G 18/10, C08G 18/80, C08G 18/12, C08G 18/08

(54) **Thermoplastische Polyurethanharnstoff-Elastomere II**
Thermoplastic polyurethane ureas II
Polyuréthane urées thermoplastiques II

(30) Priorität: 07.06.1995 DE 19520730
(43) Veröffentlichungstag der Anmeldung: 11.12.1996
(73) Patentinhaber: BAYER AG, 51368 Leverkusen (DE)
(72) Erfinder: Kirchmeyer, Stephan, Dr., 51375 Leverkusen (DE); Müller, Hanns-Peter, Dr., 51519 Odenthal (DE); Fähndrich, Jürgen, 51375 Leverkusen (DE); Hoppe, Hans-Georg, 42799 Leichlingen (DE)

(56) Entgegenhaltungen:
- EP-A- 0 021 323
- EP-A- 0 089 180
- EP-A- 0 554 718
- DE-A- 1 543 178
- DE-A- 2 302 564
- DE-A- 2 515 775
- DE-A- 2 708 820
- US-A- 3 846 378
- US-A- 4 071 505
- US-A- 4 409 380

## Beschreibung

Die Erfindung betrifft thermoplastische Polyurethanharnstoffelastomere, ein Verfahren zu ihrer Herstellung und ihrer Verwendung.

Thermoplastische Polyurethane (TPU) sind von Bedeutung wegen ihrer charakteristischen Elastomer-Eigenschaften. Unverstärkte Polyurethane umfassen einen Härtebereich von Shore A 75 bis Shore D 75, d.h. von den härteren Thermoplasten bis zu Gummi und Weich-PVC. Für bestimmte Anwendungen (Spielzeug. Haushaltsartikel, Automobile) besteht ein vermehrtes Interesse, Gummi und Weich-PVC durch TPU zu ersetzen, da diese recyclierbar sind, gegenüber Gummi deutlich bessere mechanische Eigenschaften aufweisen und beim Verbrennen keine sauren Produkte ergeben. Man braucht allerdings TPU mit einer Härte von weniger als Shore 75 A mit guten Elastomereigenschaften.

Grundsätzlich ist die Härte von TPU durch das Mengenverhältnis der Einsatzstoffe, das sog. Hart-/Weichsegmentverhältnis (vgl. Houben-Weyl, "Methoden der Organischen Chemie", Band E 20, G. Thieme Verlag 1987, S. 1568-1571) einstellbar, jedoch treten bei weichen TPU Probleme mit der Wärmeformbeständigkeit, mechanischen Eigenschaften und Kälteflexibilität auf. Solche TPU weisen dann mangelhafte Festigkeit auf, neigen zum Kleben und sind beim Spritzguß schwer entformbar. Zudem kristallisieren weiche TPU verhältnismäßig leicht, d.h. ihre Härte steigt innerhalb von Stunden oder Tagen langsam an, so daß sie als Chemiewerkstoffe unbrauchbar sind.

Polyurethanharnstoffe sind Polyurethane mit zusätzlichen Harnstoffgruppen. Weiche Polyurethanharnstoffe weisen in der Regel bessere mechanische und Wärmeeigenschaften auf als weiche Polyurethane. Sie sind jedoch nicht thermoplastisch verarbeitbar.

Eine Ausnahme bilden Polyharnstoffelastomere mit singulären, d.h. nicht paarig auftretenden Harnstoffgruppen. Polyurethanharnstoffelastomere mit singulären Harnstoffgruppen können ausschließlich durch Umsetzung von Isocyanatgruppen mit Wasser hergestellt werden, da bei der Umsetzung von Isocyanatgruppen mit Diaminen grundsätzlich paarige Harnstoffgruppen erzeugt werden. Verfahren zur Herstellung von thermoplastischen Polyurethanharnstoffelastomeren durch Umsetzung von Isocyanatgruppen mit Wasser sind bekannt, aber die Produkte und die Verfahren zu ihrer Herstellung sind nicht befriedigend.

Die gemäß DE-OS 1 645 003 erhaltenen thermoplastischen Polyurethanharnstoffelastomere enthalten Polyharnstoff in Form von Stippen und Inhomogenitäten und sind daher unbrauchbar. Die Herstellungsverfahren gemäß US-PS 4 049 632 und US-PS 4 062 834 sind zur technischen Durchführung nicht geeignet, da große Mengen an Lösungsmitteln benötigt werden. Bei der Herstellung der thermoplastischen Polyurethanharnstoffelastomere gemäß EP-A-21 323 muß das zur Reaktion benötigte Wasser unter so hohem Druck und bei so hohen Temperaturen zugeführt werden, daß das Produkt bereits während der Herstellung geschädigt wird.

Ziel der Erfindung ist, thermoplastische Polyurethanharnstoffelastomere, insbesondere mit einer Härte von 75 bis 55 Shore A zur Verfügung zu stellen, welche hervorragende mechanische und thermische Eigenschaften aufweisen und gleichzeitig die genannten Nachteile nicht haben. Ein weiteres Ziel ist, diese thermoplastischen Polyurethanharnstoffelastomere kontinuierlich im technischen Maßstab (also z.B. in Mehrwellenschneckenmaschinen) herzustellen.

Gegenstand der Erfindung ist ein Verfahren zur Herstellung thermoplastischer Polyurethanharnstoffelastomerer, worin man ein oder mehrere Polyisocyanate (A), bevorzugt organische Diisocyanate und eine zerewitinoffaktive Wasserstotffatome aufweisende Mischung (B) aus
1) 40 bis 85 Äquivalent-% (bezogen auf Isocyanatgruppen in (A)) einer oder mehrerer Verbindungen mit im Mittel mindestens 1,8 zerewitinoffaktiven Wasserstoffatomen und einem Molekulargewicht von 450 bis 10 000, bevorzugt 450 bis 6000, besonders bevorzugt 600 bis 4500,
2) 10 bis 60 Äquivalent-% (bezogen auf Isocyanatgruppen in (A)) einer oder mehrerer tertiärer Hydroxyl-Verbindungen der allgemeinen Formel (I), 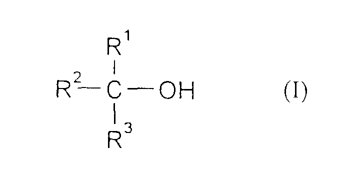 worin
   - R¹, R² und R³: unabhängig voneinander C₁-C₆-Alkyl, C₄-C₁₀-Cycloalkyl oder C₄C₁₀Arylreste darstellen, die jeweils gegebenenfalls 1 bis 3 Sauerstoffatome in Form von Ether- oder Carbonylgruppen enthalten können,
   oder der allgemeinen Formel (II), 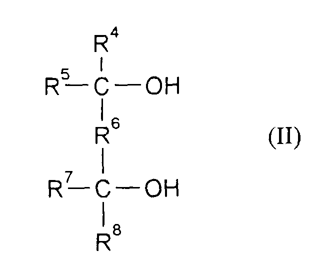 worin
   - R⁴, R⁵, R⁷ und R⁸: unabhängig voneinander und unabhängig von R¹ bis R³ die Bedeutung von R¹ bis R³ besitzen und R⁶ eine einfache Bindung oder C₁-C₁₀-Alkylen, C₄-C₁₅-Cycloalkylen oder C₆-C₁₀-Arylen darstellt, die jeweils gegebenenfalls auch 1 bis 3 Sauerstoffatome in Form von Ether- oder Carbonylgruppen enthalten können.
3) 0 bis 45 Äquivalent-% (bezogen auf Isocyanatgruppen in (A)) einer oder mehrerer Kettenverlängerungsmittel mit im Mittel mindestens 1,8 zerewitinoffaktiven Wasserstoffatomen und einem Molekulargewicht von 62 bis 400 sowie gegebenenfalls
0 bis 20 Gew.-% (bezogen auf die Gesamtmenge an thermoplastischem Polyurethanharnstoff) weiterer üblicher Hilfs- und Zusatzstoffe (C)
bei 30 bis 180°C durch Polyaddition zu einem Zwischenprodukt umsetzt und dieses durch thermische Spaltung bei 60 bis 280°C unter Abspaltung flüchtiger Bestandteile zum thermoplastischen Polyurethanharnstoffelastomeren kettenverlängert.

Ebenfalls Gegenstand der Erfindung sind die so erhaltenen thermoplastischen Polyurethanharnstoffelastomeren.

Gegenstand der Erfindung ist auch die Verwendung der thermoplastischen Polyurethanharnstoffelastomeren zur Herstellung von Formkörpern, (z.B. durch Form-, Preß- und Spritzguß) wie Platten, Behältern, Geräteteilen, Gehäusen, Rollen, Zahnrädern, Maschinen- und Fahrzeugteilen, Walzen, elastischen Überzügen, Folien, Ummantelungen, Schläuchen, Kathetern, Dichtungen, Profilen, Lagerschalen und Fäden.

Chemisch ähnelt die der Erfindung zugrundeliegende Reaktion der Synthese biurethaltiger Polyisocyanate (DE-PS 1 543 178). In dieser Synthese bilden sich in Gegenwart von überschüssigen NCO-Gruppen aus tert. Butylurethanen biurethaltige Polyisocyanate. Hier dagegen werden bei den angewandten Temperaturen und der genannten Stöchiometrie unter den Bedingungen einer Schneckenmaschine keine Biuretverzweigungen aufgebaut, sondern stippenfreie, weitgehend lineare Polyurethanharnstoffe.

Als Isocyanate (A) können aliphatische, cycloaliphatische, araliphatische, aromatische und heterocyclische Polyisocyanate oder beliebige Gemische dieser Polyisocyanate verwendet werden (vgl. Houben-Weyl, "Methoden der Organischen Chemie", Band E 20, "Makromolekulare Stoffe", Georg Thieme Verlag, Stuttgart, New York 1978, S. 1587-1593). Bevorzugt sind difunktionelle Isocyanate. Beispiele sind Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder-1,4-phenylendiisocyanat, Perhydro-2,4'- und/oder -4,4'-diphenylmethandiisocyanat, Norbornan-Diisocyanate (z.B. US-PS 3 492 330), 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat 1,5- und 2,6-Naphthylendiisocyanat sowie beliebige Gemische dieser Isomeren, Perhydro-1,5- und -2,6-Naphthylendiisocyanat sowie beliebige Gemische dieser und ihrer cis-trans-Isomeren sowie 4-Isocyanatophenyl-4-isocyanatobenzoat, 4-Isocyanatocyclohexyl-4-isocyantocyclohexancarbonsäureester sowie dessen cis/trans-Isomeren.

Bevorzugt sind aromatische Diisocyanate, insbesondere die gegebenenfalls alkylsubstituierten Toluylen- und Diphenylmethandiisocyanate, aliphatische Diisocyanate, insbesondere Hexamethylendiisocyanat und cycloaliphatische Diisocyanate wie 1-Isocyanato 1-Isocyanato-3,3,5-trimethyl-5-isocyanatomethylcyclohexan, Perhydro-2,4'-und/oder -4,4'-diphenylmethandiisocyanat.

Gegebenenfalls können auch höherfunktionelle Isocyanate wie Triphenylmethan-4,4',4"-triisocyanat, Polyphenyl-polymethylenpolyisocyanate (z.B. erhalten durch die Anilin-Formaldehyd-Kondensation und anschließende Phosgenierung) sowie die bei der technischen Isocyanatherstellung anfallenden, Isocyanatgruppen aufweisenden Destillationsrückstände, gegebenenfalls gelöst in einem oder mehreren der vorgenannten Polyisocyanate, mitverwendet werden. Dabei ist jedoch darauf zu achten, daß eine mittlere Funktionalität von zwei nicht wesentlich überschritten wird, wenn die Polyurethane thermoplastisch verarbeitet werden sollen. Gegebenenfalls müssen Reaktionspartner mit höherer Funktionalität durch Mitverwendung anderer Reaktionspartner mit einer niedrigeren Funktionalität als zwei wieder ausgeglichen werden.

Dafür geeignete monofunktionelle Isocyanate sind z.B. Stearylisocyanat, Cyclohexylisocyanat und Phenylisocyanat.

Zerewitinoff-aktive Verbindungen (B1) sind Verbindungen mit im Mittel 1,8 bis 3,0, bevorzugt 2,0 zerewitinoffaktiven Wasserstoffatomen und einem Molekulargewicht von 450 bis 10 000.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche vom Molekulargewicht 450 bis 6000, besonders bevorzugt solche vom Molekulargewicht 600 bis 4500, z.B. Hydroxylgruppen aufweisende Polyester, Polyether, Polycarbonate und Polyesteramide.

Geeignete Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren oder deren veresterungsfähigen Derivaten Die Polycarbonsäuren können aliphatischer, cycloaliphatischer, aromatischer und/oder heterocyclischer Natur sein, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endo-methylentetrahydrophthalsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, Trimethylolpropan, Tri methylol ethan, ferner Di-, Tri-, Tetra- und höhere Polyethylenglykole, Di- und höhere Polypropylenglykole sowie Di- und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar. Es können jedoch auch die aus der Fettchemie bekannten hydroxyfunktionellen Polyester wie z.B. Rizinusöl und dessen Umesterungsprodukte verwendet werden.

Geeignete Polyether sind an sich bekannt und können z.B. durch Polymerisation von Epoxiden wie Ethylenoxid, Propylenoxid, Butylenoxid, Styroloxid oder Epichlorhydrin oder von Tetrahydrofuran mit sich selbst, z.B. in Gegenwart von Lewis-Katalysatoren wie Bortrifluorid, oder durch Anlagerung der Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol(1,3) oder -(1,2), Wasser, 4,4'-Dihydroxydiphenylpropan, Anilin, Ethanolamin oder Ethylendiamin hergestellt werden.

Als Hydroxylgruppen aufweisende Polycarbonate kommen an sich bekannte in Betracht, die z.B. durch Umsetzung von Diolen wie Propandiol-(1,3), Butandiol(1,4) und/oder Hexandiol-(1,6), Diethylenglykol, Triethylenglykol, Tetraethylenglykol oder Thiodiglykol mit Diarylcarbonaten, z.B.Diphenylcarbonat, oder Phosgen hergestellt werden können (DE-OS 1 694 080, 2 221 751).

Geeignete Polyesteramide und Polyamide sind z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Ebenfalls geeignet sind Polyhydroxyverbindungen, in welchen hochmolekulare Polyaddukte bzw. Polykondensate oder Polymerisate in feindisperser, gelöster oder pfropfpolymerisierter Form enthalten sind. Solche modifizierten Polyhydroxyverbindungen können z.B. erhalten werden, wenn man die Polyaddition (z.B. Umsetzung von Polyisocyanaten mit aminofunktionellen Verbindungen) bzw. Polykondensation (z.B. von Formaldehyd mit Phenolen und/oder Aminen) in Gegenwart der Hydroxylgruppen aufweisenden Verbindungen ablaufen läßt. Entsprechende Verfahren sind beispielsweise in DE-AS 1 168 075 und 1 126 142, sowie DE-OS 2 324 134, 2 423 984, 2 512 385, 2 513 815, 2 220 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxyverbindung zu vermischen und anschließend aus dem Gemisch Wasser zu entfernen.

Auch durch Vinylpolymerisation modifizierte Polyhydroxylverbindungen, wie sie z.B. durch Polymerisation von Styrol und Acrylnitril in Gegenwart von Polyethern (US-PS 3 383 351, 3 323 093, 3 110 695, DE-AS 1 152 536) oder Polycarbonatpolyolen (DE-PS 1 769 795, US-PS 3 637 909) erhalten werden, sind geeignet. Auch Hydroxylgruppen aufweisende Polybutadiene sind geeignet.

Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Tertiäre Hydroxylverbindungen (B2) sind Verbindungen der allgemeinen Formel (I) 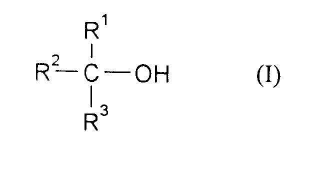 und Verbindungen der allgemeinen Formel (II) und 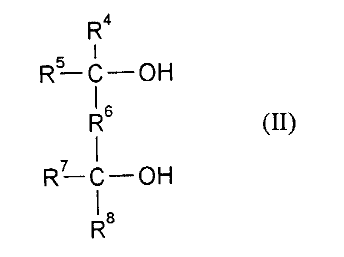 R¹, R² und R³ bedeuten unabhängig voneinander C₁-C₆-Alkyl, z.B. Methyl, Ethyl, Propyl, Isopropyl, Butyl, Pentyl oder Hexyl, C₄-C₁₀Cycloalkyl, z.B. Cyclopentyl oder Cyclohexyl, C₆-C₁₀-Aryl, z.B. Phenyl, Toluyl oder Naphthyl und können gegebenenfalls 1 bis 3 Sauerstoffatome in Form von Ether- oder Carbonylgruppen enthalten. R⁴, R⁵, R⁷ und R⁸ besitzen unabhängig voneinander und unabhängig von R¹ bis R³ die Bedeutung von R¹ bis R³. R⁶ ist C₁-C₁₀-Alkylen, C₄-C₁₅-Cycloalkylen, C₆-C₁₀-Arylen, die jeweils gegebenenfalls 1 bis 3 Sauerstoffatome in Form von Ether- oder Carbonylgruppen enthalten können oder eine einfache chemische Bindung.

Bevorzugt sind Verbindungen der allgemeinen Formel (I), besonders bevorzugt sind solche mit Methyl-, Ethyl- und Phenylgruppen.

Geeignet sind beispielsweise 1-Methylcyclohexanol, 1-Methylcyclopentanol, 2-Methyl-4-phenyl-2-butanol, 2-Methyl-2-hexanol, 2,2-Dimethyl-3-ethyl-3-pentanol, 2,3-Dimethyl-2,3-butandiol, 2,4-Dimethyl-2,4-pentandiol, 2,5-Dimethyl-2,5-hexandiol, 2,6-Dimethyl-2-heptanol, 3,7-Dimethyl-3-octanol, 4-Hydroxy-4-methyl-2-pentanon, 4-Hydroxy-2-methyl-2-pentanon, 4-Hydroxy-4-methyl-2-pentanon, 9-Octyl-9-heptadecanol, Diacetonalkohol, p-Meth-1-en-4-ol, Pinakon, Terpinen-4-ol, Terpinhydrat und Tricyclohexylmethanol.

Besonders bevorzugt sind 1,1-Diphenylethanol, 1,2-Diphenyl-2-propanol, 2-Methyl-2-butanol, 2-Methyl-2-propanol (tert.-Butanol), 2-Phenyl-2-butanol, 2-Methyl-1-phenyl-2-propanol, 2-Phenyl-2-propanol, 2,3-Dimethyl-2-butanol, 2,3-Dimethyl-3-pentanol, 3-Methyl-3-pentanol, 3-Ethyl-3-pentanol und Triphenylmethanol, Ganz besonders bevorzugt ist tert.-Butanol.

Zerewitinoff-aktive Verbindungen (B3) - Kettenverlängerungsmittel - besitzen im Mittel 1,8 bis 3,0, bevorzugt 2,0 zerewitinoffaktive Wasserstoffatome und ein Molekulargewicht von 62 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Beispiele für Verbindungen (B3) sind Di- und Polyole wie Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Hexantriol-(1,2,6), Trimethylolethan, und Pentaerythrit, Di-, Tri-, Tetra- und höhere Polyethylenglykole mit einem Molekulargewicht bis 400, sowie Di- und höhere Polypropylenglykole mit einem Molekulargewicht bis 400, 4,4'-Dihydroxydiphenylpropan, Di(hydroxymethyl)hydrochinon, Ethanolamin, Diethanolamin, N-Methyldiethanolamin, Triethanolamin und 3-Aminopropanol; aliphatische Diamine wie z.B. Ethylendiamin, 1,4-Tetramethylendiamin, Hexamethylendiamin, sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und -4,4'-diaminodiphenylmethan, p-Xylylendiamin und Bis-(3-aminopropyl)methylamin; aromatische Diamine seien Bisanthranilsäureester, 3,5- und 2,4-Diaminobenzoesäureester, 3,3'-Dichlor-4,4'-diamino-diphenylmethan, Tolylendiamin und 4,4'-Diaminodiphenylmethan.

Die gegenüber Isocyanat reaktiven Verbindungen müssen so gewählt werden, daß ihre mittlere Funktionalität zwei nicht wesentlich überschreitet, wenn thermoplastisch verarbeitbare Polyurethanharnstoffelastomere hergestellt werden sollen. Wenn höherfunktionelle Verbindungen verwendet werden, muß daher durch Mitverwendung monofunktioneller Verbindungen die Gesamtfunktionalität auf ca. 2 vermindert werden.

Die Mengen der Ausgangsstoffe (A) und (B1), (B2) und (B3) werden so gewählt, daß pro Isocyanat-Äquivalent in (A) 40 bis 85, bevorzugt 65 bis 80 Äquivalent-% der Komponente (B1), 10 bis 60, bevorzugt 12 bis 40 Äquivalent-% (B2) und 0 bis 45, bevorzugt 0 bis 10 Äquivalent-% (B3) vorhanden sind. Die Summe der Menge an Aminogruppen oder Carboxylgruppen tragenden Verbindungen in (B3) beträgt bevorzugt 0 bis 5 Äquivalent-%, der Isocyanatgruppen in (A).

In den erfindungsgemäßen Polyurethanharnstoffen sind jeweils zwei Isocyanatäquivalente in (A) mit einem Hydroxyläquivalent in (B2) unter Abspaltung eines Olefins und der Bildung einer Harnstoffgruppe umgesetzt. Daher entsprechen die gegenüber Isocyanat reaktiven Äquivalente in (B2) der doppelten Menge der Hydroxyläquivalente in (B2).

Bevorzugt ist das Mol-Verhältnis von Urethangruppen entstanden aus Isocyanatgruppen in (A) und Hydroxylgruppen in (B1) und (B3) zu der Summe aller Harnstoffgruppen, 10:1 bis 1:1. Summe aller Harnstoffgruppen sind die aus der Reaktion von Isocyanatgruppen in (A) mit Aminogruppen in (B1) und (B3) und Harnstoffgruppen aus der Reaktion von zwei Isocyanatgruppen in (A) mit einer Hydroxylgruppe in (B2).

Die Mengen der Ausgangskomponenten für die erfindungsgemäßen Polyurethanharnstoffe werden bevorzugt so gewählt, daß das Molverhältnis aus Isocyanatäquivalenten in (A) und der Summe der Äquivalente an zerewitinoffaktiven Wasserstoffatomen in (B1), (B2) und (B3), bevorzugt 0,8 bis 1,3, besonders bevorzugt 0,9 bis 1,1 beträgt.

Die erfindungsgemäßen thermoplastischen Polyurethanharnstoffelastomere können als (C) bevorzugt bis maximal 20 Gew.-% (bezogen auf die Gesamtmenge an thermoplastischem Polyurethanharnstoff) weiterer üblicher Hilfs- und Zusatzstoffe enthalten.

Dies sind u.a. an sich bekannte Katalysatoren. z.B. tertiäre Amine, wie Triethylamin, N-Methylmorpholin, N-Ethylmorpholin, N,N,N',N'-Tetramethylenethylendiamin, Pentamethyldiethylentriamin, 1,4-Diazabicyclo[2.2.2]octan, N-Methyl-N'-dimethylaminoethylpiperazine (DE-OS 2 636 787), N,N-Dimethylbenzylamin, N,N-Dimethylcyclohexylamin, 2-Methylimidazol, monocyclische und bicyclische Amidine (DE-OS 1 720 633), Bis-(dialkylamino)alkylether (US-PS 3 330 782, DE-AS 1 030 558, DE-OS 1 804 361, 2 618 280) sowie Amidgruppen (vorzugsweise Formamidgruppen aufweisende tertiäre Amine gemäß DE-OS 2 523 633 und 2 732 292). Als Katalysatoren können auch weitere organische Metallverbindungen, insbesondere organische Zinnverbindungen, verwendet werden. Als organische Zinnverbindungen kommen neben schwefelhaltigen Verbindungen wie Di-n-octylzinnmercaptid (DE-AS 1 769 367, US-PS 3 645 927) vorzugsweise Zinn(II)salze von Carbonsäuren wie Zinn(II)acetat, Zinn(II)octoat und Zinn(II)laurat sowie Zinn(IV)-Verbindungen, wie z.B. Dibutylzinnoxid, Dibutylzinndilaurat oder Dioctylzinndiacetat in Betracht. In Betracht kommen weiterhin: Titan-, Bismuth- und Antimonverbindungen wie z.B. Antimontriisopropoxid, Antimonoctoat, Antimontallat, Bismuthsalze von Carbonsäuren mit 2 bis 20 Kohlenstoffatomen wie z.B. Bismuthtrioctanoat, Dibutylbismuthoctanoat, Triphenylbismuthdidecanoat und Dibutyltitanbis(acetylacetonat).

Weitere verwendbare Katalysatoren sowie Einzelheiten über die Wirkungsweise der Katalysatoren sind im Kunststoff-Handbuch Band VII, "Polyurethane", herausgegeben von Vieweg und Höchtlen, Carl-Hanser-Verlag, München 1966, z.B. auf den Seiten 96 bis 102, beschrieben.

Die Gesamtmenge an Katalysatoren in den erfindungsgemäßen Polyurethanharnstoffelastomeren beträgt in der Regel etwa 0 bis 5 Gew.-%, bevorzugt 0 bis 2 Gew.-%, bezogen auf die Gesamtmenge an Polyurethanharnstoffelastomer.

Weitere Zusatz- und Hilfsstoffe sind z.B.: Pigmente, Farbstoffe, Flammschutzmittel wie Tris(chlorethyl)phosphat, Trikresylphosphat oder Ammoniumphosphat und -pyrophosphat, Stabilisatoren gegen Alterungs- und Witterungseinflüsse, Weichmacher, Gleit- und Entformungsmittel, fungistatisch und bakteriostatisch wirkende Substanzen sowie Füllstoffe wie Calciumcarbonat, Kieselgel, Bariumsulfat, Calciumsulfat, Kaolin, Bentonit, Zeolithe, gemahlenes Glas, Glaskugeln, Glas-, Kunststoff- oder Kohlefasern, Quarzsand oder Quarzmehl, Siliciumcarbid, Aluminiumtrihydrat, Kreide, Dolomit oder Mischungen hiervon.

Das erfindungsgemäße Verfahren kann wie folgt ausgeführt werden:

Die Polyisocyanate (A) werden mit den Verbindungen (B1), (B2) und (B3), gegebenenfalls in Anwesenheit der Hilfs- und Zusatzstoffe (C), zu Zwischenprodukten bei Temperaturen von 30-180°C, bevorzugt 60-140°C umgesetzt. Das Zwischenprodukt wird durch thermische Spaltung bei Temperaturen von 60-280°C, bevorzugt 180°C-260°C unter Abspaltung flüchtiger Bestandteile zum thermoplastischen Polyuretharnstoff kettenverlängert.

Das erfindungsgemäße Verfahren kann diskontinuierlich, z.B. unter Verwendung von Glasapparaturen im Labormaßstab oder von Kesseln oder kontinuierlich z.B. mit Hilfe von Mehrwellenschneckenmaschinen durchgeführt werden.

Es kann einstufig durchgeführt werden, beispielsweise durch Wahl einer geeigneten Temperatur, bei der die Umsetzung zum Zwischenprodukt und die Kettenverlängerung unter Abspaltung flüchtiger Bestandteile gleichzeitig erfolgt. Bevorzugt wird in mehreren Schritten gearbeitet:
i) aus zumindest Teilen von (A) und zumindest Teilen von (B1) und (B2) und gegebenenfalls der Zusatz- und Hilfsstoffe (C) wird ein Vorpolymer hergestellt und
ii) dieses Vorpolymer zusammen mit den restlichen Ausgangsstoffen und den verbliebenen Anteilen von (A), (B) und (C) zum Polyurethanharnstoff umgesetzt.

In einer besonderen Variante wird die Gesamtmenge aller Komponenten zum Vorpolymer umgesetzt. Dieses Vorpolymer ist in dieser besonderen Variante identisch mit dem Zwischenprodukt. Es wird anschließend ohne weitere Zusätze zum Polyurethanharnstoff kettenverlängert.

In einer weiteren Variante wird die Umsetzung zum Zwischenprodukt und die Kettenverlängerung zu den erfindungsgemäßen Polyurethanharnstoffen kontinuierlich in einer gegebenenfalls mit Knetelementen bestückten Mehrwellenschneckenmaschine mit selbstreinigender Schneckengeometrie bei Temperaturen von 150-280°C, bevorzugt 180-260°C durchgeführt. Sinnvollerweise setzt man Schneckenmaschinen ein, die aus mehreren getrennt heiz- bzw. kühlbaren Gehäuseteilen aufgebaut und nach Einzugszonen (Zudosierung der Reaktionskomponenten), Reaktionszonen und Extrusionszone gegliedert sind. Alle Ausgangsstellen und/oder das Vorpolymer wurden bei 100°C-180°C, vorzugsweise 140-180°C zudosiert.

Die nach dem erfindungsgemäßen Verfahren hergestellten thermoplastischen Polyurethanharnstoffelastomeren haben deutlich bessere mechanische und thermische Eigenschaften als vergleichbare Polymere, die nach Verfahren des Standes der Technik hergestellt wurden. Dies gilt vor allem für ihre elastischen Eigenschaften wie Zugdehnung und Zugfestigkeit, und thermischen Eigenschaften wie Wärmestand. Die erfindungsgemäßen thermoplastischen Polyurethanharnstoffelastomere können auf übliche Weise zu Formteilen verarbeitet werden.

### Beispiel 1

### Beispiel 1-8 (erfindungsgemäß)

### Zwischenproduktherstellung:

Man entwässert in einem 6 l Dreihalskolben mit mechanischer Rührung, Innenthermometer und Stickstoffeinlaß die in der Tabelle 1 angegebene Menge Polyol 4 Stunden bei 140°C und einem Druck von 10 mbar. Anschließend werden die Hilfsmittel bestehend aus Katalysator, Entformungshilfsmittel und Stabilisator zugegeben und die Mischung auf 80°C gekühlt. Die Isocyanatteilmenge (A) wird zugegeben und die Temperatur auf 100°C erhöht. Nach 10 Minuten wird die in der Tabelle angegebene Menge tert.-Butanol und die Isocyanat-Teilmenge (B) zugegeben und 2 Stunden bei 100°C nachgerührt. Man erhält in allen Fällen Zwischenprodukte, die ohne weitere Zusätze zu thermoplastischen Polyurethanharnstoffen kettenverlängert werden.

### Kettenverlängerung:

In die Einspeisetrichter einer üblichen Schneckenmaschine werden 2 800 g Zwischenprodukt kontinuierlich pro Stunde dosiert. Die Temperatur der verschiedenen Gehäuse ist wie folgt:

| Gehäuse | 1 | 2 | 3 | 4 | 5 | 6 | 7 | Düse |
|---|---|---|---|---|---|---|---|---|
| Beispiel 1-8 | 260 | 260 | 260 | 260 | 210 | 180 | 170 | 180 |

Die Entgasung des Polymers erfolgt in Gehäuse 7. Der Polymerstrang wird an der Düse abgenommen, durch ein Wasserbad geführt und granuliert. Es resultieren in allen Fällen wasserhelle, vollkommen durchsichtige und stippenfreie Polyurethanharnstoff-Granulate. Aus dem Granulat werden Spritzgußplatten hergestellt, deren Eigenschaften gemessen werden.

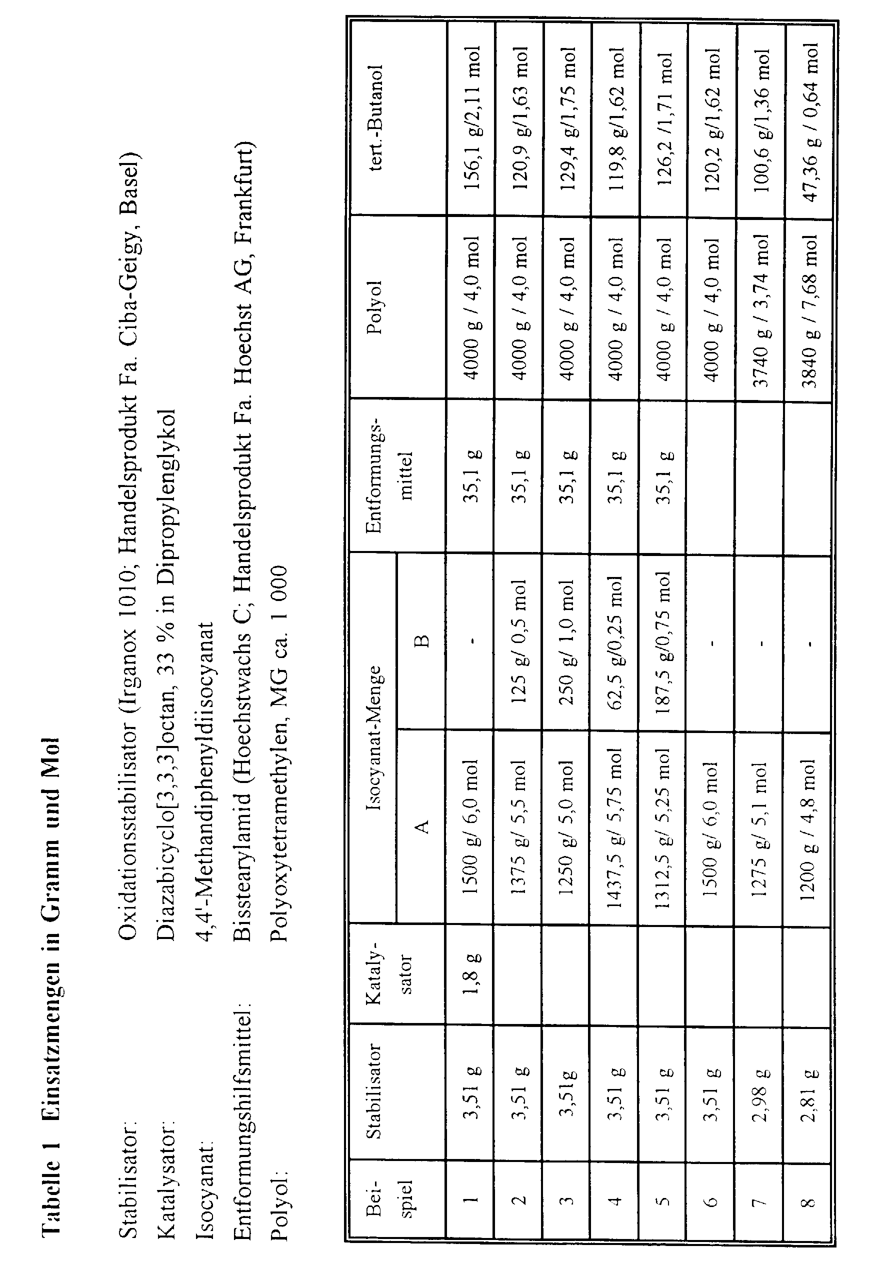

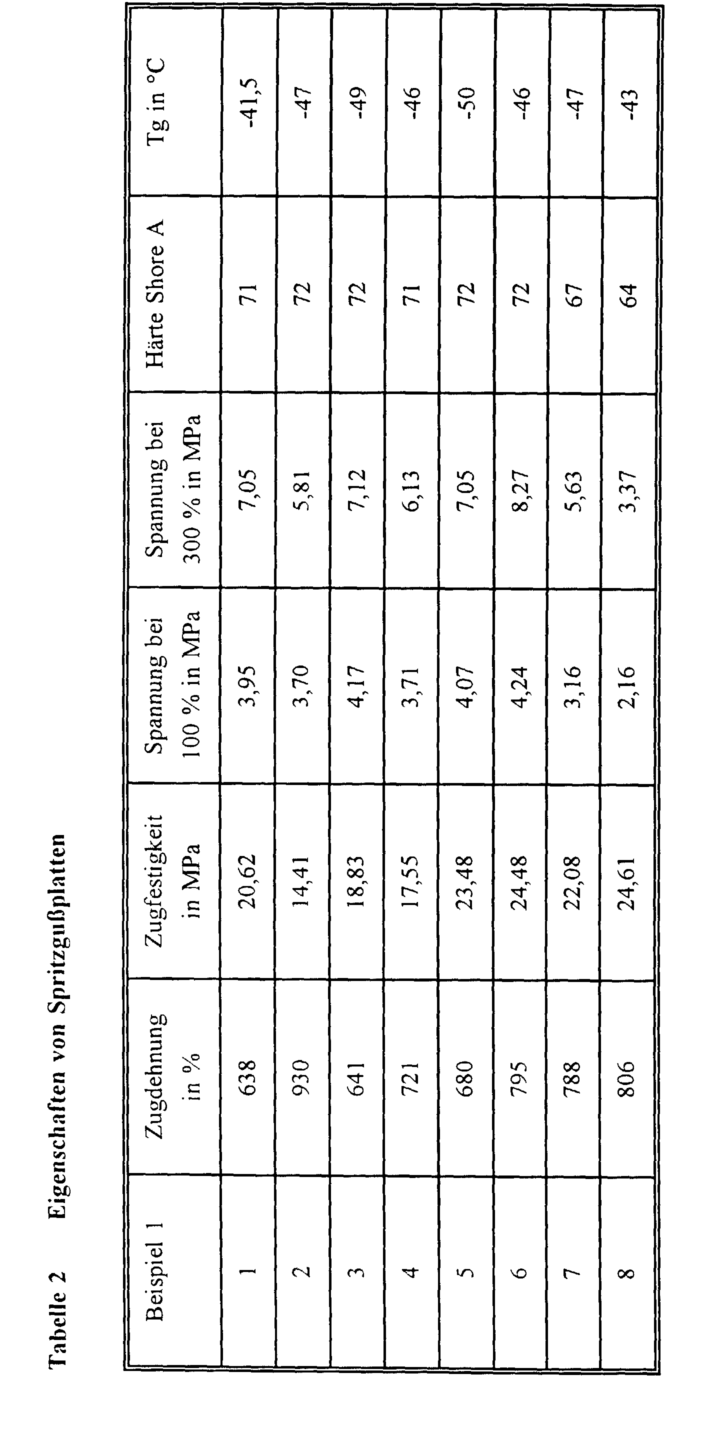

## Patentansprüche

1. Verfahren zur Herstellung von thermoplastischen Polyurethanharnstoffelastomeren, worin man ein oder mehrere Polyisocyanate (A) und eine zerewitinoffaktive Wasserstoffatome aufweisende Mischung (B) aus
1) 40 bis 85 Äquivalent-% (bezogen auf Isocyanatgruppen in (A)) einer oder mehrerer Verbindungen mit im Mittel 1,8 bis 3,0 zerewitinoffaktiven Wasserstoffatomen und einem Molekulargewicht von 450 bis 10 000,
2) 10 bis 60 Äquivalent-% (bezogen auf Isocyanatgruppen in (A)) einer oder mehrerer tertiären Hydroxyl-Verbindungen der allgemeinen Formel (I), 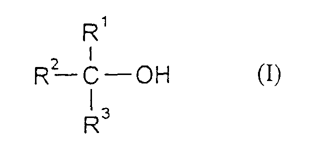 worin
R¹, R² und R³ unabhängig voneinander C₁-C₆-Alkyl, C₄-C₁₀-Cycloalkyl oder C₄-C₁₀Arylreste darstellen, die jeweils gegebenenfalls 1 bis 3 Sauerstoffatome in Form von Ether- oder Carbonylgruppen enthalten können,
oder der allgemeinen Formel (II), 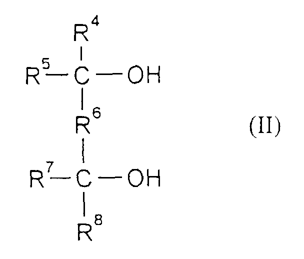 worin
R⁴, R⁵, R⁷ und R⁸ unabhängig voneinander von R¹ bis R³ die Bedeutung von R¹ bis R³ besitzen und R⁶ eine einfache Bindung oder C₁-C₁₀-Alkylen, C₄-C₁₅-Cycloalkylen oder C₆-C₁₀-Arylen darstellt, die jeweils gegebenenfalls auch 1 bis 3 Sauerstoffatome in Form von Ether- oder Carbonylgruppen enthalten können.
3) 0 bis 45 Äquivalent-% (bezogen auf Isocyanatgruppen in (A)) einer oder mehrerer Kettenverlängerungsmittel mit im Mittel mindestens 1,8 bis 3,0 zerewitinoffaktiven Wasserstoffatomen und einem Molekulargewicht von 62 bis 400 sowie
0 bis 20 Gew.-% (bezogen auf die Gesamtmenge an thermoplastischem Polyurethanharnstoff) weiterer üblicher Hilfs- und Zusatzstoffe (C)
bei 30 bis 180°C durch Polyaddition zu einem Zwischenprodukt umsetzt und diese durch thermische Spaltung bei 60-280°C unter Abspaltung flüchtiger Bestandteile zum thermoplastischen Polyurethanharnstoffelastomeren kettenverlängert.

2. Verfahren nach Anspruch 1, worin man aus zumindest Teilen von (A) und zumindest Teilen von (B1) und (B2) gegebenenfalls in Anwesenheit der Zusatz- und Hilfsstoffe (C) ein Vorpolymer herstellt und dieses zusammen mit den restlichen Ausgangsstoffen und den verbliebenen Anteilen von (A), (B) und (C) zum Zwischenprodukt umsetzt, welches dann durch thermische Spaltung unter Abspaltung flüchtiger Bestandteile zum thermoplastischen Polyurethanharnstoff kettenverlängert wird.

3. Verfahren nach Anspruch 1, worin man alle Ausgangsstoffe (A) und (B) in Anwesenheit der Zusatz- und Hilfsstoffe (C) bei 40 bis 180°C zu einem Vorpolymer umsetzt und dieses anschließend bei 160 bis 280°C ohne weitere Zusätze durch thermische Spaltung unter Abspaltung flüchtiger Bestandteile zum Polyurethanharnstoff kettenverlängert.

4. Verfahren nach Anspruch 1, worin man die thermische Spaltung in einer gegegebenenfalls mit Knetelementen bestückten Mehrwellenschneckenmaschine bei 150°C bis 280°C durchführt.

5. Thermoplastische Polyurethanharnstoffelastomere hergestellt nach Anspruch 1.

6. Verwendung der thermoplastischen Polyurethanharnstoffelastomere gemäß Anspruch 5 zur Herstellung von Formkörpern.

## Claims

1. Process for the production of thermoplastic polyurethaneurea elastomers, in which process one or more polyisocyanates (A) and a mixture (B) containing Zerewitinoff active hydrogen atoms prepared from
1) 40 to 85 equivalent-% (relative to isocyanate groups in (A)) of one or more compounds having an average of 1.8 to 3.0 Zerewitinoff active hydrogen atoms and a molecular weight of 450 to 10000,
2) 10 to 60 equivalent-% (relative to isocyanate groups in (A)) of one or more tertiary hydroxyl compounds of the general formula (I), 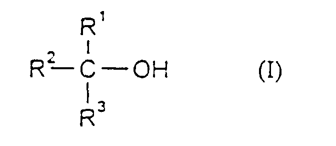 in which
R¹, R² and R³ mutually independently denote C₁-C₆ alkyl, C₄-C₁₀ cycloalkyl or C₄-C₁₀ aryl residues, which may each optionally contain 1 to 3 oxygen atoms in the form of ether or carbonyl groups,
or of the general formula (II), 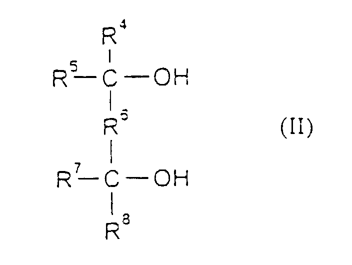 in which
R⁴, R⁵, R⁷ and R⁸ mutually independently of R¹ to R³ have the meaning of R¹ to R³ and R⁶ denotes a single bond or C₁-C₁₀ alkylene, C₄-C₁₅ cycloalkylene or C₆-C₁₀ arylene, which may each optionally also contain 1 to 3 oxygen atoms in the form of ether or carbonyl groups.
3) 0 to 45 equivalent-% (relative to isocyanate groups in (A)) of one or more chain extenders having an average of at least 1.8 to 3.0 Zerewitinoff active hydrogen atoms and a molecular weight of 62 to 400, together with
0 to 20 wt.% (relative to the total quantity of thermoplastic polyurethaneurea) of further conventional auxiliary substances and additives (C)
are reacted by polyaddition at 30 to 180°C to yield an intermediate product and this is chain extended by thermal decomposition at 60 to 280°C with elimination of volatile constituents to yield the thermoplastic polyurethaneurea elastomer.

2. Process according to claim 1, in which a prepolymer is produced from at least a proportion of (A) and at least a proportion of (B1) and (B2) optionally in the presence of the additives and auxiliary substances (C) and this prepolymer is reacted together with the remaining starting materials and the remaining proportions of (A), (B) and (C) to yield the intermediate product, which is then chain extended by thermal decomposition with elimination of volatile constituents to yield the thermoplastic polyurethaneurea.

3. Process according to claim 1, in which all the starting materials (A) and (B) are reacted at 40 to 180°C in the presence of the additives and auxiliary substances (C) to yield a prepolymer and this is then chain extended at 160 to 280°C without further additions by thermal decomposition with elimination of volatile constituents to yield the polyurethaneurea.

4. Process according to claim 1, in which thermal decomposition is performed at 150°C to 280°C in a multi-screw injection moulding machine or extruder optionally equipped with kneading discs.

5. Thermoplastic polyurethaneurea elastomers produced according to claim 1.

6. Use of the thermoplastic polyurethaneurea elastomers according to claim 5 for the production of mouldings.

## Revendications

1. Procédé pour la préparation d'élastomères thermoplastiques de polyuréthanne-urée, dans lequel on fait réagir un ou plusieurs polyisocyanates (A) et un mélange (B) présentant des atomes d'hydrogène actifs sur base de la réaction de Zerewitinoff, constitué par
1) à concurrence de 40 à 85 équivalents % (rapportés aux groupes isocyanate dans (A)), un ou plusieurs composés contenant en moyenne de 1,8 à 3,0 atomes d'hydrogène actifs sur base de la réaction de Zerewitinoff, et possédant un poids moléculaire de 450 à 10.000,
2) à concurrence de 10 à 60 équivalents % (rapportés aux groupes isocyanate dans (A)), un ou plusieurs composés hydroxylés tertiaires répondant à la formule générale (I) 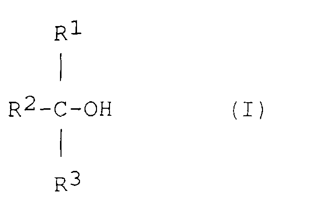 dans laquelle
R¹, R² et R³ représentent, indépendamment l'un de l'autre, un radical alkyle en C₁-C₆, un radical cycloalkyle en C₄-C₁₀ ou un radical aryle en C₄-C₁₀, qui peuvent contenir respectivement le cas échéant de 1 à 3 atomes d'oxygène sous la forme de groupes éther ou de groupes carbonyle,
ou répondant à la formule générale (II) 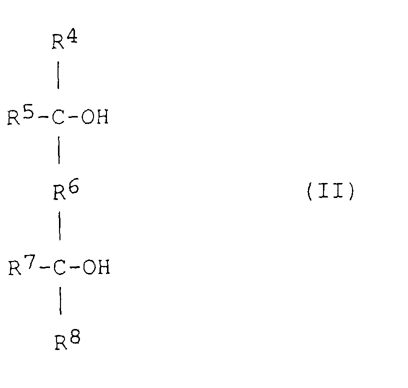 dans laquelle
R⁴, R⁵, R⁷ et R⁸ possèdent, indépendamment l'un de l'autre et indépendamment de R¹ à R³, la signification de R¹ à R³, et R⁶ représente une liaison simple ou encore un groupe alkylène en C₁-C₁₀, un groupe cycloalkylène en C₄-C₁₅ ou un groupe arylène en C₆-C₁₀ qui peuvent contenir respectivement, le cas échéant, également de 1 à 3 atomes d'oxygène sous la forme de groupes éther ou de groupes carbonyle,
3) à concurrence de 0 à 45 équivalents % (rapportés aux groupes isocyanate dans (A)), un ou plusieurs agents d'allongement de chaînes contenant en moyenne au moins de 1,8 à 3,0 atomes d'hydrogène actifs sur base de la réaction de Zerewitinoff et possédant un poids moléculaire de 62 à 400, ainsi que
à concurrence de 0 à 20% en poids (rapportés à la quantité totale de la polyuréthanne-urée thermoplastique), d'autres adjuvants et additifs (C) habituels,
à une température de 30 à 180°C, par polyaddition, pour obtenir un produit intermédiaire, et on soumet celui-ci à un allongement de chaîne par scission thermique à une température de 60-280°C avec élimination des constituants volatils, pour obtenir des élastomères thermoplastiques de polyuréthanne-urée.

2. Procédé selon la revendication 1, dans lequel, à partir d'au moins des parties de (A) et d'au moins des parties de (B1) et de (B2), le cas échéant, en présence des additifs et des adjuvants (C), on prépare un prépolymère et on fait réagir ce dernier conjointement avec les substances de départ restantes et les fractions restantes de (A), (B) et (C) pour obtenir le produit intermédiaire que l'on soumet à un allongement de chaîne par scission thermique avec élimination des constituants volatils pour obtenir une polyuréthanne-urée thermoplastique.

3. Procédé selon la revendication 1, dans lequel on fait réagir toutes les substances de départ (A) et (B) en présence des additifs et des adjuvants (C) à une température de 40 à 180°C pour obtenir un prépolymère et on soumet celui-ci ultérieurement à un allongement de chaîne à une température de 160 à 280°C sans additifs supplémentaires par scission thermique avec élimination des constituants volatils pour obtenir la polyuréthanne-urée.

4. Procédé selon la revendication 1, dans lequel on effectue la scission thermique à une température de 150°C à 280°C dans une machine à multiples vis sans fin, le cas échéant garnie avec des éléments de malaxage.

5. Elastomères thermoplastiques de polyuréthanne-urée préparés conformément à la revendication 1.

6. Utilisation des élastomères thermoplastiques de polyuréthanne-urée selon la revendication 5 pour la préparation de corps moulés.
